# EUROPÄISCHE PATENTSCHRIFT

(11) **EP 3 737 795 B1**
(45) Veröffentlichungstag und Bekanntmachung des Hinweises auf die Patenterteilung: **17.12.2025**
(21) Anmeldenummer: 19700351.0
(22) Anmeldetag: 08.01.2019
(51) Int. Cl.: E01B 9/14, E01B 9/18, E01B 9/38, F16B 2/06, F16B 5/12, F16B 13/00, F16B 13/14

(54) **SCHIENENBEFESTIGUNGSSYSTEM**
RAIL FASTENING SYSTEM
SYSTÈME DE FIXATION DE RAIL

(30) Priorität: 11.01.2018 DE 102018100554
(43) Veröffentlichungstag der Anmeldung: 18.11.2020
(73) Patentinhaber: SCHWIHAG AG, 8274 Tägerwilen (CH)
(72) Erfinder: LIENHARD, Stefan, 78464 Konstanz (DE); MEYER, Frank, 78333 Stockach (DE)
(74) Vertreter: Kross, Ulrich
(86) Internationale Anmeldenummer: PCT/EP2019/050327
(87) Internationale Veröffentlichungsnummer: WO 2019/137905

(56) Entgegenhaltungen:
- WO-A1-2011/032969
- WO-A1-2015/040118
- WO-A1-2017/215757
- DE-U1- 202015 103 972

## Beschreibung

### Technisches Gebiet

Die Erfindung betrifft ein Schienenbefestigungssystem zur Befestigung einer Schiene auf einem Schienenuntergrund, vorzugsweise für eine feste Fahrbahn, das eine Unterlegplatte mit zumindest einer Öffnung und zumindest einen Dübel aufweist, der in die Öffnung eingebracht ist. Die Erfindung betrifft ferner ein Verfahren zur Herstellung eines Schienenbefestigungssystems.

### Hintergrund der Erfindung

Zur Befestigung einer Bahnschiene auf einem Schienenuntergrund für eine feste Fahrbahn werden Unterlegplatten verwendet, die beispielsweise als Montageplatte, Systemrahmen oder Neigungsplatte ausgeführt sein können.

So beschreibt die DE 20 2015 103 972 U1 eine Montageplatte, die mit Dübeln zur Arretierung in einem Betonbett und zur Montage von Schienenhaltemitteln ausgestattet ist. Die Montageplatte weist an der Unterseite eine Auflagefläche zur Anbindung an eine Tragstruktur auf. Zur Vormontage eines Dübels (analog mehrerer Dübel) an der Montageplatte wird der Dübelkopf von der Seite der Auflagefläche in eine entsprechende Öffnung der Montageplatte eingebracht und dort mittels eines federgelagerten Haltemittels gehalten. Das so vormontierte Schienenbefestigungssystem wird in ein noch flüssiges Betonbett eingerüttelt. Nachdem der Beton erstarrt ist, wird durch die Montageplatte hindurch eine Spannschraube in den Dübel eingebracht.

Gemäß dem oben dargelegten Stand der Technik werden die Dübel von unten in die Unterlegplatte eingesteckt und arretiert. Der Beton erzeugt beim Vergießen eine Auftriebskraft, die von unten auf die Unterlegplatte wirkt und sie nach oben drückt. Gleichzeitig werden die Dübel vom Beton festgehalten, da sie aufgrund ihrer Länge tief im Beton sitzen. Aus diesem Grund besteht die Gefahr, dass sich ein Dübel von der Unterlegplatte löst und der Beton unbeabsichtigt zwischen die Unterlegplatte und den Dübel fließt. Eine Korrektur nach dem Aushärten des Betons ist zeit- und kostenaufwendig. Ein weiteres Problem besteht darin, dass der Dübel nach dem Vergießen der Montageplatte nicht ohne weiteres ersetzt werden kann, beispielsweise im Fall einer Beschädigung. Das hat zur Folge, dass vor einer etwaigen Entfernung des Dübels zunächst die Unterlegplatte aus dem Beton herausgebrochen werden muss. Da der Dübel jedoch von unten in der Unterlegplatte arretiert ist und tief im Beton eingegossen ist, kann die Demontage zu einer starken Zerstörung des Betonkörpers führen.

### Darstellung der Erfindung

Eine Aufgabe der Erfindung besteht darin, ein Schienenbefestigungssystem zur Befestigung einer Schiene auf einem Schienenuntergrund bereitzustellen, das eine verbesserte Zuverlässigkeit und/oder Haltbarkeit und/oder Wartbarkeit aufweist.

Gelöst wird die Aufgabe mit einem Schienenbefestigungssystem mit den Merkmalen des Anspruchs 1 sowie einem Verfahren mit den Merkmalen des Anspruchs 11.

Vorteilhafte Weiterbildungen folgen aus den Unteransprüchen, der folgenden Darstellung der Erfindung sowie der Beschreibung bevorzugter Ausführungsbeispiele.

Das Schienenbefestigungssystem gemäß der Erfindung dient zum lösbaren Befestigen einer Schiene auf einem Schienenuntergrund. Der Schienenuntergrund ist vorzugsweise ein Betonbett für eine feste Fahrbahn, kann jedoch auch eine Bahnschwelle oder ein anderer geeigneter Schienenuntergrund sein. Das Schienenbefestigungssystem weist eine Unterlegplatte, vorzugsweise aus einem Kunststoff, und zumindest einen Dübel auf. Die Unterlegplatte ist vorzugsweise eine Montageplatte zur Anbindung von Komponenten zur Befestigung der Schiene. Die Unterlegplatte weist zumindest eine Öffnung auf, welche die Unterlegplatte in Dickenrichtung vollständig durchdringt. In anderen Worten, die Öffnung ist eine Durchgangsöffnung. Mit der Dickenrichtung ist hierbei - im montierten Zustand der Unterlegplatte betrachtet - die Vertikalrichtung gemeint, d.h. die Schwerkraftrichtung. Der Dübel ist in die Öffnung eingebracht, darin mittels einer Haltekontur gehalten und steht in der Dickenrichtung zumindest auf einer Seite über die Unterlegplatte hervor.

Da die Öffnung eine Durchgangsöffnung in Dickenrichtung der Unterlegplatte ist, kann der Dübel zu einem späteren Zeitpunkt, etwa nach dem Umspritzen oder Vergießen mit Beton oder Einbringen in ein Betonbett, von oben aus der Unterlegplatte herausgedreht werden. Dadurch wird die Zuverlässigkeit und Wartbarkeit des Schienenbefestigungssystems verbessert. Insbesondere ist kein teilweises oder vollständiges Zerstörung des Betonbetts erforderlich. Der Dübel wird beim Einbringen in die Öffnung der Unterlegplatte weder verformt noch strukturelle geschwächt oder beschädigt, gleiches gilt für die Unterlegplatte, wodurch die Haltbarkeit des Schienenbefestigungssystems verbessert wird. Ferner kann der Dübel, da die Öffnung von beiden Seiten zugänglich ist, von oben in die Öffnung eingebracht und in Schwerkraftrichtung durch die Haltekontur sicher gehalten werden, wodurch die Gefahr verringert wird, dass sich der Dübel beim Vergießen des Betons löst, auch wenn auf die Unterlegplatte und den Dübel unterschiedliche Auftriebskräfte wirken.

Erfindungsgemäß weist die Unterlegplatte eine Montagefläche zur Anbindung einer oder mehrerer Komponenten zur Schienenbefestigung und eine der Montagefläche in Dickenrichtung gegenüberliegende Auflagefläche auf, wobei die Öffnung die Montagefläche und die Auflagefläche durchdringt bzw. sich an diesen öffnet und der Dübel auf der Seite der Auflagefläche über die Unterlegplatte hervorsteht. Die Montagefläche ist vorzugsweise profiliert, d.h. sie weist Erhöhungen und Vertiefungen auf. So kann sie einen horizontalen oder geneigten Schienenauflageabschnitt aufweisen, auf dem die Schiene im montierten Zustand ggf. über eine dämpfende und/oder federnde Zwischenlage aufliegt. Die Montagefläche kann alternativ oder zusätzlich eine oder mehrere Aufnahmen aufweisen, die etwa als Vertiefungen ausgebildet und zur Aufnahme von Winkelführungsplatten eingerichtet sind. Die Winkelführungsplatten wiederum können zusammen mit Spannklemmen, die gebogene Stahlfedern sind, zur kraftschlüssig-elastischen Halterung der Schiene dienen. Zu diesem Zweck werden die Spannklemmen vorzugsweise jeweils über eine Winkelführungsplatte so mittels einer Spannschraube verschraubt, dass ein Halteabschnitt der Spannklemme federnd elastisch auf einen Schienenfuß der Schiene drückt.

Vorzugsweise ist der Dübel von der Seite der Montagefläche in die Öffnung der Unterlegplatte eingebracht, wodurch das Schienenbefestigungssystem auf besonders zeit- und kostensparende Weise gewartet, beispielsweise der Dübel ausgetauscht, werden kann.

Vorzugsweise weist die Auflagefläche eine Rippenstruktur auf, wodurch sich die Unterlegplatte mit dem Beton verzahnt und besonders sicher verankert wird.

Erfindungsgemäß weist zur Verwirklichung der Haltekontur die Öffnung ein Innengewinde und/oder der Dübel ein Außengewinde auf, so eingerichtet, dass der Dübel von der Seite der Montagefläche in die Öffnung einschraubbar und ausschraubbar ist. Auf diese Weise wird nicht nur eine zuverlässige Arretierung des Dübels in der Öffnung erreicht, sondern der Dübel und die Unterlegplatte werden vormontiert, ohne dass eine Verformung, Beschädigung oder anderweitige Strukturschwächung auftritt. Dadurch lässt sich die Zuverlässigkeit des Schienenbefestigungssystems weiter verbessern. Zudem lässt sich der Dübel nachträglich mittels eines Werkzeugs auf einfache Weise herausschrauben, ohne dass eine Schädigung des Schienenuntergrunds auftritt. Es sei darauf hingewiesen, dass in besonderen Ausführungsformen auf eines der beiden genannten Gewinde verzichtet werden kann, wenn ein Ein- und Ausschrauben des Dübels weiterhin möglich ist.

Vorzugsweise weist das Außengewinde zwei Abschnitte unterschiedlicher Gewindekenngrößen - etwa Flankenform, Flankenabstand, Kerndurchmesser, Nenndurchmesser usw. - auf, um unterschiedlichen Anforderungen bei der Halterung in der Öffnung und der Arretierung im Betonbett oder eines anderen Schienenuntergrunds Rechnung zu tragen.

Vorzugsweise weist zur Verwirklichung der Haltekontur der Dübel alternativ oder zusätzlich zur Gewindestruktur einen Dübelkopf auf, dessen Durchmesser den kleinsten Durchmesser der Öffnung übersteigt. So kann der Dübel problemlos von oben in die Öffnung eingebracht werden und gleichzeitig besonders sicher gegen ein unbeabsichtigtes Lösen beim Einbringen in ein Betonbett oder Umspritzen mit Beton gesichert werden.

Vorzugsweise sitzt die Unterlegplatte in der Dickenrichtung 8 bis 15 mm tief im Betonbett und/oder reicht der Dübel 120 mm tief oder tiefer in das Betonbett hinein, wodurch eine zuverlässige Halterung der Schiene erreicht wird, bei gleichzeitiger Wartbarkeit des Schienenbefestigungssystems.

Vorzugsweise weist die Unterlegplatte mehrere, besonders bevorzugt zwei, Öffnungen, welche die Unterlegplatte in der Dickenrichtung vollständig durchdringen, und das Schienenbefestigungssystem mehrere, besonders bevorzugt zwei, Dübel auf, die entsprechend in die Öffnungen eingebracht sind, darin jeweils mittels einer Haltekontur gehalten sind und in der Dickenrichtung über die Unterlegplatte hervorstehen. Dies verbessert zum einen die Verankerung der Unterlegplatte im Betonbett, zum anderen können die mehreren Dübel auf synergetische Weise zur Schienenbefestigung und/oder Anbindung anderer Komponenten genutzt werden. So kann im Fall von zwei Dübeln die Schiene beidseitig auf der Unterlegplatte befestigt werden, etwa durch Verspannen zweier Spannklemmen, ggf. mit zwischenliegenden Winkelführungsplatten.

Das erfindungsgemäße Verfahren dient der Herstellung eines Schienenbefestigungssystems gemäß der obigen Beschreibung. Der Dübel (analog mehrere Dübel) wird hierbei so in die zugehörige Öffnung eingebracht, dass dieser darin mittels der Haltekontur gehalten wird und in der Dickenrichtung der Unterlegplatte zumindest auf einer Seite über die Unterlegplatte hervorsteht. Das Verfahren verwirklicht die Vormontage des Schienenbefestigungssystems.

Die Merkmale, technischen Wirkungen, Vorteile, sowie Ausführungsbeispiele, die in Bezug auf das Schienenbefestigungssystem beschrieben wurden, gelten analog für dessen Herstellungsverfahren.

So wird der Dübel gemäß einer besonders bevorzugten Ausführungsform von oben, d.h. von der Seite der Montagefläche, in die Öffnung eingebracht, so dass dieser nach unten, d.h. auf der Seite der Auflagefläche, über die Unterlegplatte hervorsteht. Ferner wird die Vormontage vorzugsweise so durchgeführt, dass der Dübel und/oder die Unterlegplatte beim Einbringen des Dübels in die Öffnung nicht verformt, insbesondere nicht geschwächt, wird. Wenn eine Verformung der Unterlegplatte gemäß einer besonders bevorzugten Ausführungsform ausgeschlossen ist, dann ist damit umfasst, dass sich auch Teile der Unterlegplatte, etwa die Haltekontur, nicht verformen.

Weitere Vorteile und Merkmale der vorliegenden Erfindung sind aus der folgenden Beschreibung bevorzugter Ausführungsbeispiele ersichtlich. Die dort beschriebenen Merkmale können alleinstehend oder in Kombination mit einem oder mehreren der oben dargelegten Merkmale umgesetzt werden, insofern sich die Merkmale nicht widersprechen. Die folgende Beschreibung der bevorzugten Ausführungsbeispiele erfolgt dabei unter Bezugnahme auf die begleitenden Zeichnungen.

### Kurze Beschreibung der Figuren

Die Figur 1 ist eine perspektivische, teilweise auseinandergezogene Ansicht, die ein Schienenbefestigungssystem, eine damit zu befestigende Schiene sowie ein Betonbett zeigt.

Die Figur 2 zeigt einen schematischen Querschnitt durch die Unterlegplatte des Schienenbefestigungssystems der Figur 1.

Die Figur 3 zeigt eine schematische Draufsicht auf die Unterlegplatte des Schienenbefestigungssystems der Figur 1.

### Detaillierte Beschreibung bevorzugter Ausführungsbeispiele

Im Folgenden werden bevorzugte Ausführungsbeispiele anhand der Figuren beschrieben. Dabei sind gleiche, ähnliche oder gleichwirkende Elemente in den Figuren mit identischen Bezugszeichen versehen, und auf eine wiederholende Beschreibung dieser Elemente wird teilweise verzichtet, um Redundanzen zu vermeiden.

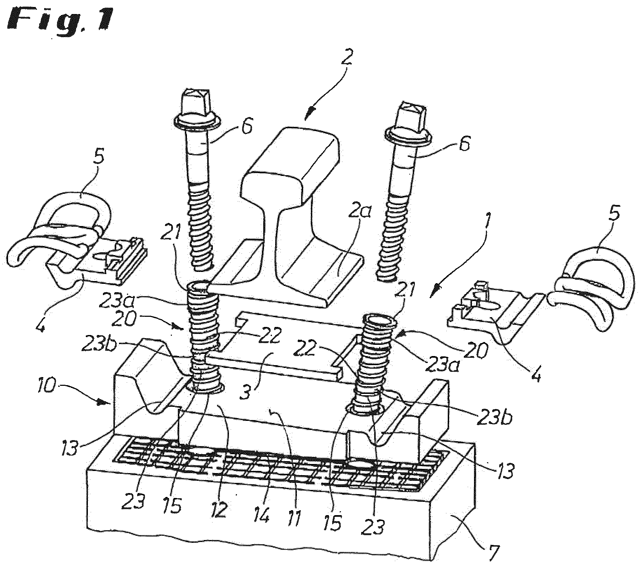

Die Figur 1 zeigt ein Schienenbefestigungssystem 1, das eine Unterlegplatte 10 sowie zwei damit verbundene Dübel 20 aufweist.

Die Unterlegplatte 10 ist im vorliegenden Ausführungsbeispiel eine Montageplatte mit einer profilierten Montagefläche 11 zur Befestigung einer Schiene 2. Zu diesem Zweck weist die Montagefläche 11 einen geneigten Schienenauflageabschnitt 12 auf, auf dem die Schiene 2 im befestigten Zustand ggf. über eine dämpfende und/oder federnde Zwischenlage 3 aufliegt. Die Montagefläche 11 weist ferner Aufnahmen 13 auf, die zur Aufnahme von Winkelführungsplatten 4 eingerichtet sind. Die Winkelführungsplatten 4 wiederum dienen zusammen mit Spannklemmen 5, die gebogene Stahlfedern sind, zur kraftschlüssig-elastischen Halterung der Schiene 2. Zu diesem Zweck werden die Spannklemmen 5 jeweils über eine Winkelführungsplatte 4 so mittels einer Spannschraube 6 verschraubt, dass ein Halteabschnitt der Spannklemme 5 federnd elastisch auf den Schienenfuß 2a der Schiene 2 drückt.

Wenngleich im vorliegenden Ausführungsbeispiel die Unterlegplatte 10 eine Montageplatte der oben beschriebenen Art ist, kann die Unterlegplatte 10 auch auf andere Weise ausgeführt sein. So kann die Unterlegplatte 10 beispielsweise ein Systemrahmen sein. Die Unterlegplatte 10 dient zur Anbindung von Komponenten - beispielsweise Schiene 2, Zwischenlage 3, Winkelführungsplatte 4, Spannklemme 5 und/oder Spannschrauben 6 - an ein Betonbett 7, das im vorliegenden Ausführungsbeispiel als Schienenunterlage dient. Neben der Profilierung (Erhöhungen und Vertiefungen) der Montagefläche 11 weist die Unterlegplatte 10 auf der Seite des Betonbetts 7, d.h. an der Unterseite, eine Auflagefläche 14 auf, die vorzugsweise eine Rippenstruktur hat, wodurch sich die Unterlegplatte 10 mit dem Beton verzahnt.

Die Unterlegplatte 10 ist vorzugsweise aus einem Kunststoff gefertigt, kann jedoch auch aus einem anderen Material, beispielsweise aus Metall oder einer Metalllegierung gefertigt sein.

Die Unterlegplatte 10 weist eine oder mehrere, im vorliegenden Ausführungsbeispiel zwei, Öffnungen 15 zur Aufnahme der Dübel 20 auf. Die Öffnungen 15 sind als Durchgangsöffnungen ausgebildet, d.h. sie durchdringen die Unterlegplatte 10 in vertikaler Richtung vollständig, wodurch die Dübel 20 von oben (im montierten Zustand betrachtet) in die entsprechenden Öffnungen 15 eingebracht werden können. Die Dübel 20 sind in ihren Öffnungen 15 entlang der Schwerkraftrichtung (im montierten Zustand betrachtet) mittels einer Haltestruktur arretiert, d.h. sie können nicht ohne weiteres, insbesondere nicht ohne Zerstörung, nach unten aus den Öffnungen 15 herausgezogen werden. Zu diesem Zweck kann der Dübel 20 einen Dübelkopf 21 aufweisen, dessen Struktur sich vom Dübelschaft 22 des Dübels 20 unterscheidet, insbesondere kann der Dübelkopf 21 einen gegenüber dem Dübelschaft 22 vergrößerten Durchmessers aufweisen. Der Durchmesser des Dübelkopfs 21 kann insbesondere größer sein als der kleinste Durchmesser der Öffnung 15.

Vorzugsweise wird der Dübel 20 in die entsprechende Öffnung 15 eingeschraubt. In diesem Fall weist der Dübel 20 ein Außengewinde 23 auf. Das Außengewinde 23 wiederum kann einen Kopfgewindeabschnitt 23a und einen Schaftgewindeabschnitt 23b aufweisen, deren Gewindekenngrößen - etwa Flankenform, Flankenabstand, Kerndurchmesser, Nenndurchmesser usw. - sich unterscheiden. Im Fall des verschraubbaren Dübels 20 weisen die Öffnungen 15 vorzugsweise entsprechende Innengewinde 16 auf. Das Innengewinde 16 und das Außengewinde 23, insbesondere der Kopfgewindeabschnitt 23a, sind einander angepasst, so dass ein sicheres und haltbares Verschrauben gewährleistet ist. Die Gewindepaarung ist so ausgelegt, dass eine sichere Abdichtung gegen aufsteigenden Beton gewährleistet ist.

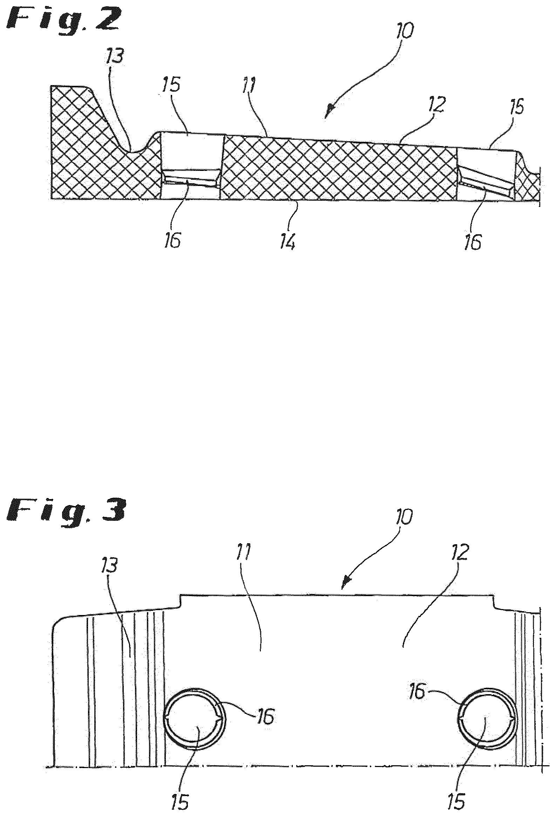

Die Innengewinde 16 der Öffnungen 15 gehen schematisch aus der Querschnittsansicht der Unterlegplatte 10 gemäß der Figur 2 hervor. Eine Draufsicht auf die Unterlegplatte 10 des Schienenbefestigungssystems 1 ist in der Figur 3 dargestellt.

Das Schienenbefestigungssystem 1 aus Unterlegplatte 10 und Dübel(n) 20 wird vorzugsweise vormontiert oder teilvormontiert, d.h. die Dübel 20 werden in die Unterlegplatte 10 eingebracht, bevor das Schienenbefestigungssystem im Betonbett 7 verankert oder mit Beton umspritzt wird. Es sei darauf hingewiesen, dass eine oder mehrere der oben dargelegten Komponenten - beispielsweise Winkelführungsplatte(n) 4 und Spannklemme(n) 5 - als Teil des Schienenbefestigungssystems 1 angesehen werden können.

Nach der Vormontage des Schienenbefestigungssystems 1 wird gemäß der vorliegenden Ausführungsform die Unterlegplatte 10 mit den vormontierten Dübeln 20 zur Endmontage in flüssigen Beton des Betonbetts 7 eingegossen oder mit Beton umspritzt. Nach dem Aushärten sitzt die Unterlegplatte beispielsweise 8 bis 15 mm tief im Beton. Die Dübel 20 reichen tiefer in den Beton, beispielsweise 120 mm oder mehr.

Da die Dübel 20 von oben in die Öffnungen 15 eingebracht und in Schwerkraftrichtung sicher arretiert sind, können sich die Dübel 20 beim Vergießen des Betons nicht lösen, auch wenn auf die Unterlegplatte 10 und die Dübel 20 unterschiedliche Auftriebskräfte wirken. Der Dübel 20 wird beim Einbringen in die Öffnung 15 weder verformt noch strukturelle geschwächt oder beschädigt, gleiches gilt für die Unterlegplatte 10, wodurch die Haltbarkeit des Schienenbefestigungssystems 1 verbessert wird. Insbesondere findet keine Verformung der Haltestruktur statt. Ferner können die Dübel 20 zu einem späteren Zeitpunkt, etwa aufgrund von Verschleiß oder einer Beschädigung, von oben aus der Unterlegplatte 10 herausgenommen, vorzugsweise herausgeschraubt, werden. Eine teilweise oder vollständige Zerstörung des Betonbetts 7 ist nicht erforderlich.

Soweit anwendbar, können alle einzelnen Merkmale, die in den Ausführungsbeispielen dargestellt sind, miteinander kombiniert und/oder ausgetauscht werden, wie in den Ansprüchen definiert.

### Bezugszeichenliste

- 1: Schienenbefestigungssystem
- 2: Schiene
- 2a: Schienenfuß
- 3: Zwischenlage
- 4: Winkelführungsplatte
- 5: Spannklemme
- 6: Spannschraube
- 7: Betonbett
- 10: Unterlegplatte
- 11: Montagefläche
- 12: Schienenauflageabschnitt
- 13: Aufnahme
- 14: Auflagefläche
- 15: Öffnung
- 16: Innengewinde
- 20: Dübel
- 21: Dübelkopf
- 22: Dübelschaft
- 23: Außengewinde
- 23a: Gewindekopfabschnitt
- 23b: Gewindeschaftabschnitt

## Patentansprüche

1. Schienenbefestigungssystem (1) zur Befestigung einer Schiene (2) auf einem Schienenuntergrund, vorzugsweise für eine feste Fahrbahn, das eine Unterlegplatte (10), vorzugsweise aus einem Kunststoff, und zumindest einen Dübel (20) aufweist, wobei
die Unterlegplatte (10) zumindest eine Öffnung (15) aufweist, welche die Unterlegplatte (10) in Dickenrichtung vollständig durchdringt, und
der Dübel (20) in die Öffnung (15) eingebracht ist, darin mittels einer Haltekontur gehalten ist und in der Dickenrichtung zumindest auf einer Seite über die Unterlegplatte (10) hervorsteht, wobei
die Unterlegplatte (10) eine Montagefläche (11) zur Anbindung einer oder mehrerer Komponenten zur Schienenbefestigung und eine der Montagefläche (11) in Dickenrichtung gegenüberliegende Auflagefläche (14) aufweist, wobei die Öffnung (15) die Montagefläche (11) und die Auflagefläche (14) durchdringt und der Dübel (20) auf der Seite der Auflagefläche (14) über die Unterlegplatte (10) hervorsteht,
**dadurch gekennzeichnet, dass** zur Verwirklichung der Haltekontur die Öffnung (15) ein Innengewinde (16) und/oder der Dübel (20) ein Außengewinde (23) aufweist, so eingerichtet, dass der Dübel (20) von der Seite der Montanefläche (11) in die Öffnung (15) einschraubbar und ausschraubbar ist.

2. Schienenbefestigungssystem (1) nach Anspruch 1, **dadurch gekennzeichnet, dass** der Dübel (20) von der Seite der Montagefläche (11) in die Öffnung (15) eingebracht ist.

3. Schienenbefestigungssystem (1) nach Anspruch 1 oder 2, **dadurch gekennzeichnet, dass** die Montagefläche (11) einen Schienenauflageabschnitt (12), vorzugsweise geneigt, der zur Auflage der Schiene (2), vorzugsweise über eine dämpfende und/oder federnde Zwischenlage (3), eingerichtet ist, und/oder eine oder mehrere Aufnahmen (13) aufweist, die zur Aufnahme von Winkelführungsplatten (4) eingerichtet sind.

4. Schienenbefestigungssystem (1) nach einem der vorigen Ansprüche, **dadurch gekennzeichnet, dass** die Auflagefläche (14) eine Rippenstruktur aufweist.

5. Schienenbefestigungssystem (1) nach einem der vorigen Ansprüche, **dadurch gekennzeichnet, dass** das Außengewinde (23) zwei Abschnitte unterschiedlicher Gewindekenngrößen aufweist.

6. Schienenbefestigungssystem (1) nach einem der vorigen Ansprüche, **dadurch gekennzeichnet, dass** zur Verwirklichung der Haltekontur der Dübel (20) einen Dübelkopf (21) aufweist, dessen Durchmesser den kleinsten Durchmesser der Öffnung (15) übersteigt.

7. Schienenbefestigungssystem (1) nach einem der vorigen Ansprüche, **dadurch gekennzeichnet, dass** in den Dübel (20) eine Spannschraube (6) eingeschraubt ist, vorzugsweise ist eine Spannklemme (5) so mittels der Spannschraube (6) verschraubt, dass ein Halteabschnitt der Spannklemme (5) federnd elastisch auf einen Schienenfuß (2a) der Schiene (2) drückt.

8. Schienenbefestigungssystem (1) nach einem der vorigen Ansprüche, **dadurch gekennzeichnet, dass** die Unterlegplatte (10) und der Dübel (20) zumindest teilweise in einem Betonbett (7) verankert oder zumindest teilweise von Beton umspritzt sind.

9. Schienenbefestigungssystem (1) nach Anspruch 8, **dadurch gekennzeichnet, dass** die Unterlegplatte (10) in der Dickenrichtung 8 bis 15 mm tief im Betonbett (7) sitzt und/oder der Dübel (20) 120 mm tief oder tiefer in das Betonbett (7) reicht.

10. Schienenbefestigungssystem (1) nach einem der vorigen Ansprüche, **dadurch gekennzeichnet, dass** die Unterlegplatte (10) mehrere, vorzugsweise zwei, Öffnungen (15), welche die Unterlegplatte (10) in der Dickenrichtung vollständig durchdringen, und das Schienenbefestigungssystem (1) mehrere, vorzugsweise zwei, Dübel (20) aufweist, die entsprechend in die Öffnungen (15) eingebracht sind, darin jeweils mittels einer Haltekontur gehalten sind und in der Dickenrichtung über die Unterlegplatte (10) hervorstehen.

11. Verfahren zur Herstellung eines Schienenbefestigungssystems (1) nach einem der vorigen Ansprüche, wobei der Dübel (20) so in die Öffnung (15) eingebracht wird, dass dieser darin mittels der Haltekontur gehalten wird und in der Dickenrichtung der Unterlegplatte (10) zumindest auf einer Seite über die Unterlegplatte (10) hervorsteht.

12. Verfahren nach Anspruch 11, **dadurch gekennzeichnet, dass** die Unterlegplatte (10) eine Montagefläche (11) zur Anbindung von einer oder mehreren Komponenten zur Schienenbefestigung und eine der Montagefläche (11) in Dickenrichtung gegenüberliegende Auflagefläche (14) aufweist, wobei der Dübel (20) so von der Seite der Montagefläche (11) in die Öffnung (15) eingebracht wird, dass dieser auf der Seite der Auflagefläche (14) über die Unterlegplatte (10) hervorsteht.

## Claims

1. A rail fastening system (1) for fastening a rail (2) to a railway substructure, preferably for a slab track having a shim (10), preferably made out of a plastic, and at least one dowel (20), wherein
the shim (10) has at least one opening (15), which completely penetrates the shim (10) in the thickness direction, and
the dowel (20) is introduced into the opening (15), held therein by means of a retaining contour, and protrudes over the shim (10) in the thickness direction at least on one side, wherein
the shim (10) has a mounting surface (11) for connecting one or several components for rail fastening and a support surface (14) lying opposite the mounting surface (11) in the thickness direction, wherein the opening (15) penetrates the mounting surface (11) and the support surface (14), and the dowel (20) protrudes over the shim (10) on the side of the support surface (14),
**characterized in that**, in order to realize the retaining contour, the opening (15) has a female thread (16) and/or the dowel (20) has a male thread, set up in such a way that the dowel (10) can be screwed into and unscrewed from the opening (15) from the side of the mounting surface (11).

2. The rail fastening system (1) according to claim 1, **characterized in that** the dowel (20) is introduced into the opening (15) from the side of the mounting surface (11).

3. The rail fastening system (1) according to claim 1 or 2, **characterized in that** the mounting surface (11) has a rail support section (12), preferably inclined, which is set up for supporting the rail (2), preferably via a cushioning and/or springy intermediate layer (3), and/or one or several receptacles (13), which are set up to receive angle guide plates (4).

4. The rail fastening system (1) according to one of the preceding claims, **characterized in that** the support surface (14) has a rib structure.

5. The rail fastening system (1) according to one of the preceding claims, **characterized in that** the male thread (23) has two sections with different thread sizes.

6. The rail fastening system (1) according to one of the preceding claims, **characterized in that**, in order to realize the retaining contour, the dowel (20) has a dowel head (21) whose diameter exceeds the smallest diameter of the opening (15).

7. The rail fastening system (1) according to one of the preceding claims, **characterized in that** a tension screw (6) is screwed into the dowel (20); a clamping terminal (5) is preferably screwed by means of the tension screw (6) in such a way that a retaining section of the clamping terminal (5) presses on a rail foot (2a) of the rail (2) with springy elasticity.

8. The rail fastening system (1) according to one of the preceding claims, **characterized in that** the shim (10) and the dowel (20) are at least partially anchored in a concrete bed (7) or at least partially sprayed with concrete.

9. The rail fastening system (1) according to claim 8, **characterized in that** the shim (10) rests 8 to 15 mm deep in the concrete bed (7), and/or the dowel (20) extends 120 mm deep or deeper into the concrete bed (7).

10. The rail fastening system (1) according to one of the preceding claims, **characterized in that** the shim (10) has several, preferably two, openings (15), which completely penetrate the shim (10) in the thickness direction, and that the rail fastening system (1) has several, preferably two, dowels (20), which are correspondingly introduced into the openings (15), each held therein by means of a retaining contour, and protrude over the shim (10) in the thickness direction.

11. A method for manufacturing a rail fastening system (1) according to one of the preceding claims, wherein the dowel (20) is introduced into the opening (15) in such a way as to be held therein by means of the retaining contour and protrude over the shim (10) in the thickness direction of the shim (10), at least on one side.

12. The method according to claim 11, **characterized in that** the shim (10) has a mounting surface (11) for connecting one or several components for rail fastening and a support surface (14) lying opposite the mounting surface (11) in the thickness direction, wherein the dowel (20) is introduced into the opening (15) from the side of the mounting surface (11) in such a way that it protrudes over the shim (10) on the side of the support surface (14).

## Revendications

1. Système de fixation de rail (1) pour la fixation d'un rail (2) sur un support de rail, de préférence pour une voie fixe, lequel présente une plaque de base (10), de préférence en une matière plastique, et au moins un goujon (20), dans lequel
la plaque de base (10) présente au moins une ouverture (15) traversant entièrement la plaque de base (10) dans la direction d'épaisseur, et
le goujon (20) est introduit dans l'ouverture (15), maintenu dans celle-ci au moyen d'un contour de retenue et dépasse de la plaque de base (10) au moins sur un côté dans la direction d'épaisseur, dans lequel
la plaque de base (10) présente une surface de montage (11) pour le raccordement d'un ou de plusieurs composants pour la fixation du rail et une surface d'appui (14) opposée à la surface d'appui (14) dans la direction d'épaisseur, dans lequel l'ouverture (15) traverse la surface de montage (11) et la surface d'appui (14) et le goujon (20) dépasse de la plaque de base (10) du côté de la surface d'appui (14),
**caractérisé en ce que** pour réaliser le contour de retenue, l'ouverture (15) présente un filetage intérieur (16) et/ou le goujon (20) présente un filetage extérieur (23), configurés de telle façon que le goujon (20) peut être vissé dans et hors de l'ouverture (15) depuis le côté de la surface de montage (11).

2. Système de fixation de rail (1) selon la revendication 1, **caractérisé en ce que** le goujon (20) est introduit dans l'ouverture (15) depuis le côté de la surface de montage (11).

3. Système de fixation de rail (1) selon la revendication 1 ou 2, **caractérisé en ce que** la surface de montage (11) présente une section d'appui de rail (12), de préférence inclinée, laquelle est configurée pour l'appui du rail (2), de préférence par le biais d'une couche intermédiaire (3) d'amortissement ou élastique, et/ou un ou plusieurs logements (13) configurés pour recevoir des plaques de guidage angulaire (4).

4. Système de fixation de rail (1) selon l'une des revendications précédentes, **caractérisé en ce que** la surface d'appui (14) présente une structure nervurée.

5. Système de fixation de rail (1) selon l'une des revendications précédentes, **caractérisé en ce que** le filetage extérieur (23) présente deux sections avec différentes dimensions caractéristiques de filetage.

6. Système de fixation de rail (1) selon l'une des revendications précédentes, **caractérisé en ce que** pour réaliser le contour de retenue, le goujon (20) présente une tête de goujon (21) dont le diamètre dépasse le plus petit diamètre de l'ouverture (15).

7. Système de fixation de rail (1) selon l'une des revendications précédentes, **caractérisé en ce qu'**une vis de serrage (6) est vissée dans le goujon (20), de préférence une mâchoire de serrage (5) est vissée de telle façon au moyen de la vis de serrage (6), qu'une section de retenue de la mâchoire de serrage (5) appuie de façon élastique sur un patin de rail (2a) du rail (2).

8. Système de fixation de rail (1) selon l'une des revendications précédentes, **caractérisé en ce que** la plaque de base (10) et le goujon (20) sont ancrés au moins partiellement dans un lit de béton (7) ou au moins partiellement enrobés dans du béton.

9. Système de fixation de rail (1) selon la revendication 8, **caractérisé en ce que** la plaque de base (10) repose à une profondeur de 8 à 15 mm dans le lit de béton (7) dans la direction d'épaisseur et/ou le goujon (20) s'enfonce à une profondeur de 120 mm ou plus dans le lit de béton (7).

10. Système de fixation de rail (1) selon l'une des revendications précédentes, **caractérisé en ce que** la plaque de base (10) présente plusieurs ouvertures (15), de préférence deux, lesquelles traversent entièrement la plaque de base (10) dans la direction d'épaisseur, et le système de fixation de rail (1) présente plusieurs goujons (20), de préférence deux, lesquels sont introduits de manière correspondante dans les ouvertures (15), où ils sont retenus respectivement au moyen d'un contour de retenue, et dépassent de la plaque de base (10) dans la direction d'épaisseur.

11. Procédé de fabrication d'un système de fixation de rail (1) selon l'une des revendications précédentes, dans lequel le goujon (20) est introduit de telle façon dans l'ouverture (15), que celui-ci y est retenu au moyen du contour de retenue et dépasse de la plaque de base (10) au moins sur un côté dans la direction d'épaisseur de la plaque de base (10).

12. Procédé selon la revendication 11, **caractérisé en ce que** la plaque de base (10) présente une surface de montage (11) pour le raccordement d'un ou de plusieurs composants pour la fixation du rail et une surface d'appui (14) opposée à la surface de montage (11) dans la direction d'épaisseur, dans lequel le goujon (20) est introduit de telle façon dans l'ouverture (15) depuis le côté de la surface de montage (11), que celui-ci dépasse de la plaque de base (10) du côté de la surface d'appui (14).
